# EUROPÄISCHE PATENTSCHRIFT

(11) **EP 2 628 237 B1**
(45) Veröffentlichungstag und Bekanntmachung des Hinweises auf die Patenterteilung: **06.01.2016**
(21) Anmeldenummer: 11781754.4
(22) Anmeldetag: 13.10.2011
(51) Int. Cl.: H02K 1/27

(54) **PERMANENTMAGNETROTOR FÜR EINEN ELEKTRISCHEN MOTOR**
PERMANENT MAGNET ROTOR FOR AN ELECTRIC MOTOR
ROTOR AUX AIMANTS PERMANENTS POUR MOTEUR ÉLECTRIQUE

(30) Priorität: 14.10.2010 DE 102010048310
(43) Veröffentlichungstag der Anmeldung: 21.08.2013
(73) Patentinhaber: Continental Automotive GmbH, 30165 Hannover (DE)
(72) Erfinder: Schröder, Lothar, 61184 Karben (DE)
(86) Internationale Anmeldenummer: PCT/EP2011/067867
(87) Internationale Veröffentlichungsnummer: WO 2012/049236

(56) Entgegenhaltungen:
- DE-A1- 19 832 253
- DE-A1-102008 043 144
- DE-A1-102008 048 944
- DE-U1- 29 801 184

## Beschreibung

Die Erfindung betrifft einen Rotor für einen elektrischen Motor.

Elektrische Motoren weisen regelmäßig einen Rotor und einen Stator auf. Insbesondere im Bereich der Fahrzeugtechnik setzen sich zunehmend sogenannte bürstenlose Gleichstrommotoren durch, die auch als BLDC-Motoren bezeichnet werden. Derartige BLDC-Motoren sind Synchronmaschinen, die durch einen Gleichstrom angetrieben werden und eine elektronische Kommutierungseinrichtung aufweisen, anstatt von mechanischen Kommutatoren und Bürsten.

Auf diese Weise ist eine geringere Reibung im Vergleich zu Motoren mit Kommutatoren und Bürsten gewährleistet, was sich somit positiv auf den Wirkungsgrad auswirkt. Darüber hinaus kann ein sogenanntes Bürstenfeuer vermieden werden, welches zum einen zu elektrischen Verlusten führt und andererseits auch zu einem verstärkten mechanischen Verschleiß beiträgt.

Der Rotor, beispielsweise von BLDC-Motoren, weist einen Rotorgrundkörper auf, auf dem Permanentmagnete angeordnet sind. Aufgrund der Tatsache, dass sich keine Wicklungen von Spulen auf dem Rotor befinden müssen, sind diese auch nicht zentrifugalen Kräften ausgesetzt. Ferner sind Wicklungen lediglich auf dem Stator angeordnet mit der Folge, dass zum Kühlen keine Luftkühlung im Bereich des Rotors erforderlich ist und somit der innere Bereich, insbesondere der Bereich des Rotors, in dem die Permanentmagnete angeordnet sind, nach außen hin abgekapselt sein kann und so auch von Schmutzpartikeln und anderen externen Partikeln geschützt sein kann.

Aus der DE 10 2008 043 144 A1 ist eine elektrische Maschine bekannt, die als Klauenpolgenerator ausgebildet ist. Ein Rotor weist Klauenpolfinger auf. Zwischen den einzelnen axial konisch ausgebildeten Klauenpolfingern der Klauenpole befinden sich Zwischenräume, in welchen Permanentmagnete angeordnet sind. Die Permanentmagnete dienen der Reduzierung des Streuflusses. Die Permanentmagnete werden durch Halteelemente, die federnd ausgebildet sind, in den Zwischenräumen zwischen den einzelnen Klauenpolfingern befestigt. Dazu sind die Halteelemente in Polnuten der Klauenpolfinger eingeschoben.

Aus der DE 198 32 253 A1 ist ein Elektromotor mit einem Rotor und einem Stator bekannt. Der Rotor weist mindestens zwei voneinander getrennte, permanentmagnetische Magnetschalen auf. Der Stator ist konzentrisch um den Rotor angeordnet und weist elektrische Spulen auf. Ein Halteelement ist vorgesehen aus magnetisch nichtleitendem Material zur Halterung der Magnetschalen. Die Magnetschalen liegen auf ihrer radial äußeren Seite an jeweils zumindest einer Halteschale aus einem Material mit einer hohen magnetischen Leitfähigkeit an. Die Halteschalen zweier Magnetschalen sind voneinander beabstandet und von dem in einem seitlichen Bereich der Magnetschalen angeordneten Halteelement in Richtung der Rotorachse vorgespannt.

DE 10 2008 048 944 A1 offenbart einen Wechselstromgenerator mit einem Rotor und einem Stator, der radial außerhalb des Rotors angeordnet ist und sich axial entlang der Länge des Rotors erstreckt und um den Umfang des Rotors herum erstreckt. Der Stator und der Rotor sind in einem Gehäuse angeordnet. Der Rotor umfasst einen oder mehrere Permanentmagnete, die in Magnetschlitzen zwischen Rotorpolen angeordnet sind. Der Rotor umfasst einen Rotorkern und einen oder mehrere Magnetschlitze zwischen Rotorpolen. Der jeweilige Magnetschlitz weist einen zulaufenden Querschnitt auf, derart, dass die Schlitzbreite mit zunehmender radialer Erstreckung des Schlitzes von der Welle zunimmt. An einem radial äußeren Ende der Rotorpole erstreckt sich eine Schlitzlippe am Umfang von mindestens einem der Rotorpole in Richtung eines entgegengesetzten Rotorpols.

Ein Halteelement ist vorgesehen, um den Magnet in dem Magnetschlitz in einer radialen Richtung zu arretieren. Das Halteelement ist in dem Magnetschlitz radial zwischen dem Magnet und der Schlitzlippe angeordnet.

Aus der DE 298 01 184 U1 ist ein Generator für ein Kraftfahrzeug bekannt mit einem Erregersystem aus einer Vielzahl elektrisch erregter Einzelpole in einem Rotor, in Form von durch zumindest eine gemeinsame Erregerspule erregten Klauenpolen, bei der zur Kompensation des magnetischen Streuflusses in die Freiräume zwischen den axial gegeneinander gerichteten Klauenpolen der an den axialen Enden des Rotors angebrachten Polplatinen Permanentmagnete eingebracht sind. Die Permanentmagnete sind von einer Halterung gegenüber Zentrifugalkräften abgestützt und von dieser gehalten. Die Halterung ist aus zwei unmagnetischen Aufnahmekäfigen mit jeweils einer Ringscheibe gebildet. An der Ringscheibe sind mehrfach abgekantete Streifenabschnitte angeformt, die pro Freiraum jeweils eine Aufnahmekammer für mindestens einen Permanentmagneten bilden, die mindestens zur axialen Mitte des Rotors und zur zentrifugal beanspruchten Seite der Freiräume hin geschlossen ist. Die Aufnahmekammer ist an den Klauenpolen und/oder den Polplatinen festgelegt.

Die Aufgabe, die der Erfindung zugrunde liegt, ist es einen Rotor für einen elektrischen Motor zu schaffen, der zum einen kostengünstig herstellbar ist und zum anderen zu einem zuverlässigen Betrieb beiträgt.

Die Aufgabe wird gelöst durch die Merkmale des unabhängigen Patentanspruchs. Vorteilhafte Ausgestaltungen sind in den Unteransprüchen gekennzeichnet.

Die Erfindung zeichnet sich aus durch einen Rotor für einen elektrischen Motor, wobei der Rotor einen Rotorgrundkörper hat, der radiale Auflageflächen aufweist. Ferner hat er Permanentmagnetkörper, die radial nach außen gerichtet auf den radialen Auflageflächen angeordnet sind. Dem jeweiligen Permanentmagnetkörper wird jeweils ein Blechhalter zugeordnet, der den jeweiligen Permanentmagnetkörper an seiner der jeweiligen Auflagefläche abgewandten Seite zumindest teilweise überdeckt und der ausgebildet und angeordnet ist, dass er den jeweiligen Permanentmagnetkörper radial bezüglich des Rotorgrundkörpers fixiert. Auf diese Weise können die jeweiligen Permanentmagnetkörper durch Blechhalter, die kostengünstig herstellbar sind, zuverlässig radial bezüglich des Rotorgrundkörpers fixiert werden, was aufgrund der bei der Drehung des Rotors auftretenden Fliehkräfte für einen zuverlässigen Betrieb des Rotors einen wichtigen Beitrag leistet.

Darüber hinaus ist es so insbesondere möglich kostengünstig herstellbare quaderförmige Permanentmagnetkörper einzusetzen, die somit keine speziellen Spuren aufweisen müssen für eine direkte Formschlussverbindung mit dem Rotorgrundkörper. Es kann somit auf speziell, insbesondere schalenförmig, geformte Permanentmagnetkörper verzichtet werden, die beispielsweise in dieser Form speziell gesintert werden.

Darüber hinaus können dann auch im Vergleich zu Ansätzen, bei denen Permanentmagnete mittels eines Spritzgussverfahrens mit dem Rotorgrundkörper verbunden sind, auf spezielle Konturen verzichtet werden bei den Permanentmagnetkörpern, die einen Hinterschnitt erzeugen, um die Fliehkräfte im Betrieb zu halten.

Darüber hinaus weisen die Blechhalter magnetisch günstige Eigenschaften auf, und tragen dazu bei, dass ein Luftspalt zwischen dem Rotor und einem Stator des Motors verringert wird mit einem magnetisch leitfähigen Material. So kann insbesondere für die Blechhalter ein Stahl eingesetzt werden.

Ferner überdeckt der jeweilige Blechhalter den jeweiligen Permanentmagnetkörper an seiner der jeweiligen Auflagefläche abgewandten Seite in Umfangsrichtung des Rotors in einem Zentralbereich des jeweiligen Permanentmagnetkörpers und spart jeweilige Randbereiche in Umfangsrichtung aus. Auf diese Weise kann besonders wirkungsvoll ein Beitrag geleistet werden, einen Luftspalt zwischen dem Rotor und dem Stator in dem Zentralbereich zu verringern und so zu einem höheren Wirkungsgrad des Motors beizutragen. Darüber hinaus wird durch das Aussparen der Randbereiche ein Beitrag geleistet, das die Breite des Luftspalts in den Randbereichen einen gegebenenfalls aufgrund von Bauteileintoleranzen kritischen Wert nicht unterschreitet. Besonders vorteilhaft kommt dies zum Tragen beim Einsatz von quaderförmigen Permanentmagnetkörpern, die aufgrund ihrer Geometrie dazu beitragen, dass der Luftspalt ohne Berücksichtigung des jeweiligen Blechhalters in dem jeweiligen Zentralbereich deutlich breiter ist als in den Randbereichen. Auf diese Weise kann somit durch das Vorsehen der Blechhalter neben ihrer Funktion der mechanischen Fixierung der Permanentmagnetkörper auch der Verlauf der Breite des jeweiligen Luftspalts in Umfangrichtung vergleichmäßigt werden.

Gemäß einer weiteren vorteilhaften Ausgestaltung weist der jeweilige Blechhalter in dem Bereich der Überdeckung des jeweiligen Permanentkörpers an dessen jeweiliger Auflagefläche abgewandten Seite eine Andruckeinheit auf, die so ausgebildet ist, dass sie eine radial nach innen gerichtete Vorspannkraft auf den jeweiligen Permanentmagnetkörper ausübt. Auf diese Weise kann ein Beitrag geleistet werden für eine besonders zuverlässige Fixierung des jeweiligen Permanentmagnetkörpers auch unter Berücksichtigung, dass die jeweiligen einzelnen Bauteile des Rotors fertigungsbedingte Toleranzen aufweisen.

Besonders vorteilhaft ist es in diesem Zusammenhang, wenn die Andruckeinheit eine Sicke umfasst, die einfach bei dem Blechhalter vorgesehen werden kann. Darüber hinaus ist es in diesem Zusammenhang auch vorteilhaft, wenn die Andruckeinheit einen Bogen umfasst, da auch dieser besonders einfach hergestellt werden kann.

Gemäß einer weiteren vorteilhaften Ausgestaltung ist ein tangentiales Fixierungselement vorgesehen, das so ausgebildet und angeordnet ist, dass es den jeweiligen Permanentmagnetkörper bezogen auf den Rotorgrundkörper tangential fixiert. Auf diese Weise kann ein Beitrag geleistet werden eine gewünschte in Bezug auf die jeweilige Auflagefläche vorgegebene Position des Permanentmagnetkörpers in Umfangsrichtung auch bei längerem Betrieb sehr zuverlässig beizubehalten. Besonders vorteilhaft kann das Fixierungselement als Klebung ausgebildet sein. Es kann jedoch auch vorteilhaft als Formteilelement ausgebildet sein, welches in Umfangsrichtung zwischen zwei benachbarten Permanentmagnetkörpern angeordnet sein kann.

Gemäß einer weiteren vorteilhaften Ausgestaltung sind die jeweiligen Blechhalter durch Formschlusselemente mit den jeweils benachbarten Blechhaltern gekoppelt. Auf diese Weise können die einzelnen Blechhalter besonders günstig fixiert werden und so insbesondere eine Verkettung der einzelnen Formschlusselemente stattfinden, insbesondere um einen Teil oder auch den gesamten Umfang des Rotors.

Gemäß einer weiteren vorteilhaften Ausgestaltung sind die jeweiligen Blechhalter durch Schweißung mit dem jeweiligen benachbarten Blechhalter gekoppelt. Alternativ oder zusätzlich können die jeweiligen Blechhalter auch mit dem Rotorgrundkörper gekoppelt sein, so beispielsweise über Formschluss oder auch eine Schweißung, insbesondere eine Laserschweißung.

Gemäß einer weiteren vorteilhaften Ausgestaltung umfasst ein Blechkäfig zumindest eine Käfigeinheit, durch die mehrere Blechhalter einstückig ausgebildet sind. Auf diese Weise ist ein besonders kostengünstiges Herstellen der Blechhalter möglich, so beispielweise im Stanz-Biegeverfahren. In diesem Zusammenhang ist es besonders vorteilhaft, wenn mehrere Käfigeinheiten durch Formschlusselemente miteinander gekoppelt sind oder durch Schweißverbindungen miteinander gekoppelt sind. Auf diese Weise kann besonders günstig der Blechkäfig hergestellt werden. Insbesondere können so beispielsweise die einzelnen Käfigeinheiten nach Aufbringen der Permanentmagnetkörper auf die jeweiligen Auflageflächen dann aufgesetzt werden und danach miteinander gekoppelt werden, so beispielsweise durch die Formschlusselemente oder auch durch die Schweißverbindungen, was eine einfache Fertigung ermöglicht.

Ausführungsbeispiele der Erfindung sind im Folgenden anhand der schematischen Zeichnungen näher erläutert. Es zeigen:
- Figur 1: einen Rotor in einer perspektivischen Ansicht,
- Figur 2: den Rotor in einer Ansicht orthogonal zu seiner Rotationsachse und

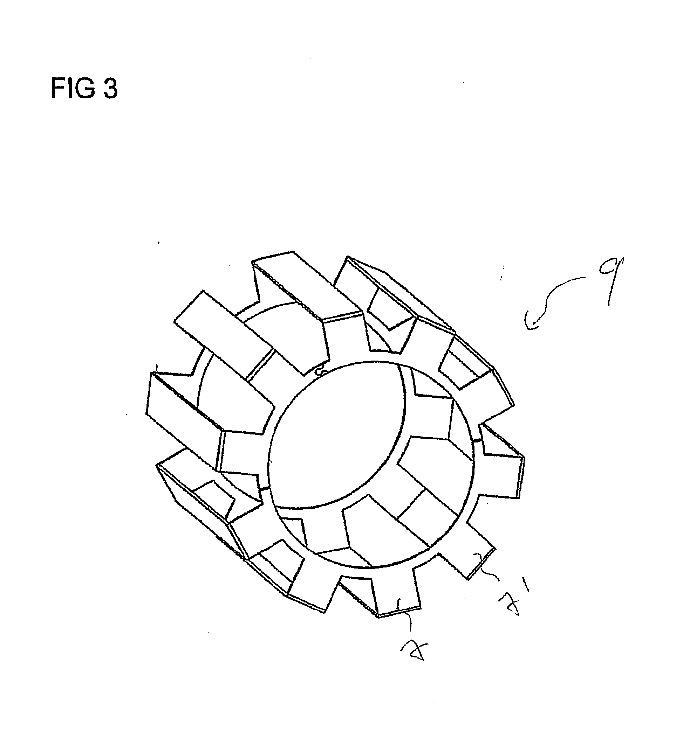

- Figur 3: mehrere Blechhalter in Form eines Blechkäfigs.

Elemente gleicher Konstruktion oder Funktion sind figurenübergreifend mit den gleichen Bezugszeichen gekennzeichnet.

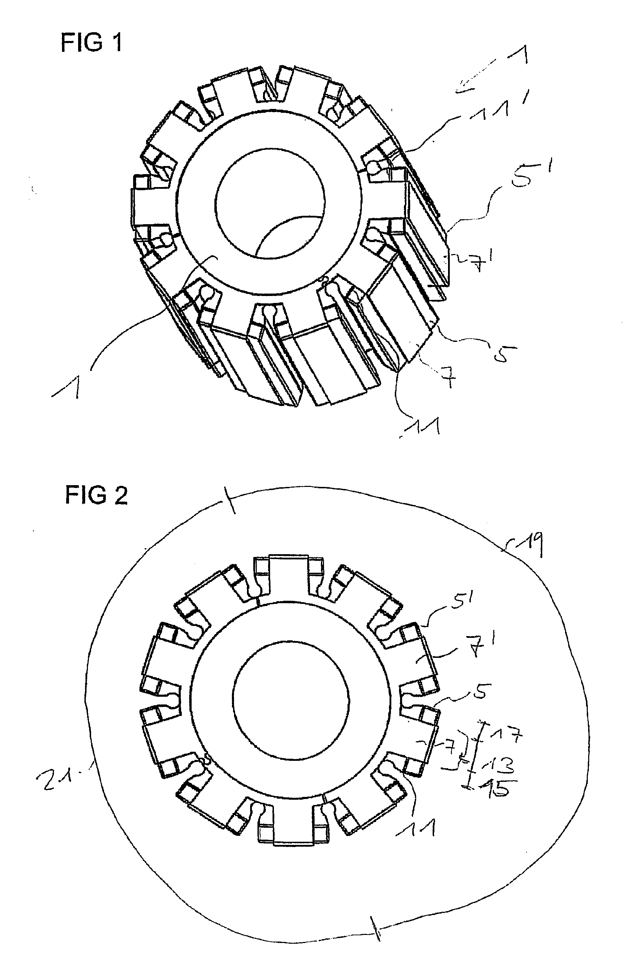

Ein Rotor 1 (Figur 1) weist einen Rotorgrundkörper auf, der beispielsweise ein Rotorblechpaket umfasst. Darüber hinaus sind auf dem Rotorgrundkörper in Umfangsrichtung mehrere Permanentmagnetkörper 5, 5' angeordnet. In dem vorliegenden Ausführungsbeispiel sind dies beispielhaft zehn Permanentmagnetkörper 5, 5'. In alternativen Ausgestaltungen kann diese Anzahl jedoch auch beliebig abweichen und somit größer oder auch kleiner sein. Darüber hinaus sind Blechhalter 7, 7' vorgesehen, die derart ausgebildet und angeordnet sind, dass sie den jeweiligen Permanentmagneten 5, 5' radial bezüglich des Rotorgrundkörpers 3 fixieren.

Der Rotorgrundkörper 3 weist radiale Auflageflächen 11, 11' auf. Die Permanentmagnetkörper sind radial nach außen gerichtet auf den radialen Auflageflächen 11, 11' angeordnet. Die Permanentmagnetkörper können grundsätzlich verschiedenartige Konturen aufweisen. Sie können so beispielsweise auch nach außen hin eine die Kreiskontur des Rotors annähernde Form aufweisen. Bevorzugt sind die Permanentmagnetkörper 5, 5' jedoch quaderförmig ausgebildet, was einen Beitrag zu einer besonders kostengünstigen Herstellung leistet.

Dem jeweiligen Permanentmägnetkörper ist jeweils ein Blechhalter 7, 7' zugeordnet, der den jeweiligen Permanentmagnetkörper 5, 5' an seiner der jeweiligen Auflagefläche abgewandten Seite zumindest teilweise überdeckt und der so ausgebildet und angeordnet ist, dass er den jeweiligen Permanentmagnetkörper 5, 5' radial bezüglich des Rotorgrundkörpers fixiert. Der Blechhalter 7, 7' ist so insbesondere laschenförmig ausgebildet. In dem dargestellten Ausführungsbeispiel überdeckt der jeweilige Blechhalter 7, 7' den jeweiligen Permanentmagnetkörper 5, 5' an seiner der jeweiligen Auflagefläche abgewandten Seite in Umfangsrichtung des Rotors in einem Zentralbereich 13 des jeweiligen Permanentmagnetkörpers 5, 5' und spart jeweilige Randbereiche 15, 17 in Umfangsrichtung aus. Auf diese Weise kann insbesondere bei quaderförmiger Ausbildung des jeweiligen Permanentmagnetkörpers 5, 5' ein Beitrag geleistet werden, einen Verlauf des Luftspalts in Umfangsrichtung des Rotors 1 zu vergleichmäßigen. Bevorzugt ist der jeweilige Blechhalter 7, 7' aus einem Stahl ausgebildet, der regelmäßig gute magnetische Leitfähigkeit aufweist. Insbesondere weist der Stahl einen geeigneten Eisenanteil auf. Der Randbereich 15, 17 erstreckt sich in Umfangsrichtung über eine Breite, die insbesondere abhängt von einer Dicke des eingesetzten Blechs für den Blechhalter 7, 7' und einer zumindest einzuhaltenden Luftspaltbereite zwischen dem Rotor 1 und dem Stator.

Der jeweilige Blechhalter weist in dem Bereich der Überdeckung des jeweiligen Permanentmagnetkörpers 5, 5' an dessen jeweiliger Auflagefläche 11, 11' abgewandten Seite eine Andruckeinheit auf, die so ausgebildet ist, dass sie eine radial nach innen gerichtete Vorspannkraft auf den jeweiligen Permanentmagnetkörper ausübt. Die Andruckeinheit umfasst so beispielsweise eine Sicke und/oder einen Bogen.

Die jeweiligen Blechhalter 7, 7' können jeweils Formschlusselemente aufweisen, mit denen sie mit jeweils benachbarten Blechhaltern 7, 7' gekoppelt sind und somit insbesondere in Form einer Verkettung um den Umfang des Rotors angeordnet sind. Alternativ oder zusätzlich können die jeweiligen Blechhalter 7, 7' auch durch Schweißung mit dem jeweiligen benachbarten Blechhalter 7, 7' gekoppelt sein. Sie können auch alternativ oder zusätzlich mit dem Rotorgrundkörper 3 direkt gekoppelt sein, so beispielsweise über Formschluss oder eine Schweißung. Bevorzugt wird im Hinblick auf die Schweißungen eine Laserschweißung eingesetzt.

In der Figur 2 ist dargestellt, dass ein Blechkäfig ausgebildet ist, der zumindest eine Käfigeinheit 19, 21 umfasst, durch die mehrere Blechhalter 7, 7' einstückig ausgebildet sind.

In dem in der Figur 2 gezeigten Ausführungsbeispiel umfasst der Blechkäfig zwei Käfigeinheiten 19, 21, die sich jeweils hälftig um den Umfang des Rotors 1 erstrecken. Grundsätzlich können diese sich jedoch auch anderweitig um den Umfang des Rotors 1 erstrecken oder auch mehr als zwei Käfigeinheiten 19, 21 umfassen. Eine einzelne Käfigeinheit 19, 21 kann dann so besonders einfach hergestellt werden, insbesondere durch ein Stanz-Biegeverfahren. Die einzelne Käfigeinheit 19, 21 kann bevorzugt auch einzeln auf den Rotorgrundkörper nach Aufsetzen der Permanentmagnetkörper 5, 5' montiert werden.

Bevorzugt werden dann anschließend die jeweiligen Käfigeinheiten 19, 21 durch Schweißung und/oder entsprechende Formschlusselemente miteinander gekoppelt, so dass die Käfigeinheiten 19, 21 einen Blechkäfig 9 bilden. Die Käfigeinheiten 19, 21 können bei der Herstellung so insbesondere in radialer Richtung auf den Rotorgrundkörper 3 aufgesetzt werden. Alternativ kann der Blechkäfig auch schon vor der Montage auf den Rotorgrundkörper 3 so vorgefertigt sein, dass er sich in kompletter Umfangsrichtung um den Rotor 1 grundsätzlich erstreckt mit entsprechenden Blechhaltern 7, 7' und dann in axialer Richtung auf den Rotorgrundkörper und die Permanentmagnetkörper 5, 5' aufgeschoben wird. In diesem Fall ist an einem stirnseitigen Ende des Blechkäfigs dieser bei dem Aufschieben noch nicht mit dem in der Ansicht der Figur 2 beispielsweise stirnseitig vorhandenen sternförmigen Körper versehen, sondern wird nach dem Aufschieben durch insbesondere eine Schweißverbindung an den axialen Kanten der Blechhalter 7, 7' mittels eines entsprechenden Sterns durch insbesondere eine Schweißverbindung verbunden und so zu dem fertigen Blechkäfig montiert.

Besonders vorteilhaft kann es für die Herstellung sein, wenn die Permanentmagnetkörper 5, 5' erst nach Montage der jeweiligen Blechhalter 7, 7' magnetisiert werden.

Der Rotor 1 zeichnet sich insbesondere dadurch aus, dass eine sehr gute radiale Fixierung der Permanentmagnetkörper 5, 5' gewährleistet sein kann und auch eine sehr hohe Drehzahlgrenze erreicht werden kann, insbesondere höher als bei einer stirnseitigen Umspritzung die grundsätzlich komplett entfallen kann. Darüber hinaus ist eine axiale Montage in dem Stator nicht behindert.

Die Blechstärke kann in einer Ausführungsform beispielsweise in etwa 0,3 mm betragen.

Darüber hinaus kann tangentiales Fixierungselement vorgesehen sein, dass so angeordnet und ausgebildet ist, dass es den jeweiligen Permanentmagnetkörper 5, 5' bezogen auf den Rotorgrundkörper tangential fixiert. Das Fixierungselement kann beispielsweise als Klebung zwischen der Auflagefläche 11, 11' und dem Permanentmagnetkörper 5, 5' ausgebildet sein. Es kann jedoch beispielsweise auch durch geeignete Formteile gebildet sein, die in die Zwischenräume zwischen den jeweiligen Permanentmagnetkörpern 5, 5' eingesetzt sind.

Der Rotor 1 wird bevorzugt in einem elektrischen Motor eingesetzt, der neben dem Rotor noch einen Stator aufweist. Auf dem Stator können dann entsprechende Wicklungen angeordnet sein mittels derer ein, insbesondere rotierendes, Magnetfeld eingeprägt wird, das auf den Rotor 1 einwirkt. Beispielsweise kann der Rotor 1 für einen BLDC-Motor eingesetzt werden. Er kann jedoch grundsätzlich auch für einen andersartigen Motor, wie beispielsweise eine reguläre Synchronmaschine, eingesetzt werden.

## Patentansprüche

1. Rotor für einen elektrischen Motor, mit
- einem Rotorgrundkörper (3) aufweisend radiale Auflageflächen (11, 11'),
- Permanentmagnetkörpern (5, 5'), die radial nach außen gerichtet auf den radialen Auflageflächen (11, 11') angeordnet sind,
- jeweils einem dem jeweiligen Permanentmagnetkörper (5, 5') zugeordneten Blechhalter (7, 7'), der den jeweiligen Permanentmagnetkörper (5, 5') an seiner der jeweiligen Auflagefläche (11, 11') abgewandten Seite zumindest teilweise überdeckt und derart ausgebildet und angeordnet ist, dass er den jeweiligen Permanentmagnetkörper (5, 5') radial bezüglich des Rotorgrundkörpers (3) fixiert, wobei der jeweilige Blechhalter (7, 7') den jeweiligen Permanentmagnetkörper (5, 5') an seiner der jeweiligen Auflagefläche (11, 11') abgewandten Seite in Umfangsrichtung des Rotors (1) in einem Zentralbereich (13) des jeweiligen Permanentmagnetkörpers (5, 5') überdeckt und jeweilige Randbereiche (15, 17) ausspart.

2. Rotor nach Anspruch 1, bei dem der jeweilige Blechhalter (7, 7') in dem Bereich der Überdeckung des jeweiligen Permanentmagnetkörpers (5, 5') an dessen jeweiliger Auflagefläche (11, 11') abgewandten Seite eine Andruckeinheit umfasst, die so ausgebildet ist, dass sie eine radial nach innen gerichtete Vorspannkraft auf den jeweiligen Permanentmagnetkörper (5, 5') ausübt.

3. Verfahren nach Anspruch 2, bei dem die Andruckeinheit eine Sicke umfasst.

4. Verfahren nach einem der Ansprüche 2 oder 3, bei dem die Andruckeinheit einen Bogen umfasst.

5. Rotor nach einem der vorstehenden Ansprüche, bei dem ein tangentiales Fixierungselement vorgesehen ist, das so ausgebildet und angeordnet ist, dass es den jeweiligen Permanentmagnetkörper (5, 5') bezogen auf den Rotorgrundkörper (3) tangential fixiert.

6. Rotor nach Anspruch 5, bei dem das Fixierungselement als Klebung ausgebildet ist.

7. Rotor nach einem der vorstehenden Ansprüche, bei dem die jeweiligen Blechhalter (7, 7') durch Formschlusselemente mit den jeweils benachbarten Blechhaltern (7, 7') gekoppelt sind.

8. Rotor nach einem der vorstehenden Ansprüche, bei dem die jeweiligen Blechhalter (7, 7') durch Schweißung mit dem jeweiligen benachbarten Blechhalter gekoppelt sind.

9. Rotor nach einem der vorstehenden Ansprüche, bei dem ein Blechkäfig (9) zumindest eine Käfigeinheit (19, 21) umfasst, durch die mehrere Blechhalter (7, 7') einstückig ausgebildet sind.

10. Rotor nach Anspruch 9, bei dem mehrere Käfigeinheiten (19, 21) durch Formschlusselemente miteinander gekoppelt sind.

11. Rotor nach Anspruch 9 oder 10, bei dem mehrere Käfigeinheiten (19, 21) durch Schweißverbindung miteinander gekoppelt sind.

## Claims

1. A rotor for an electric motor, having
- a rotor basic body (3), which has radial resting surfaces (11, 11'),
- permanent magnet bodies (5, 5'), which are arranged, pointing radially outwards, on the radial resting surfaces (11, 11'),
- in each case one sheet-metal holder (7, 7'), which is associated with the respective permanent magnet body (5, 5') and which covers the respective permanent magnet body (5, 5') at least partially on its side facing away from the respective resting surface (11, 11') and is formed and arranged in such a way that it fixes the respective permanent magnet body (5, 5') radially with respect to the rotor basic body (3), wherein the respective sheet-metal holder (7, 7') covers the respective permanent magnet body (5, 5') on its side facing away from the respective resting surface (11, 11') in the circumferential direction of the rotor (1) in a central region (13) of the respective permanent magnet body (5, 5') and leaves respective peripheral regions blank (15, 17).

2. Rotor according to Claim 1, in which the respective sheet-metal holder (7, 7') comprises a contact-pressure unit in the region in which the respective permanent magnet body (5, 5') is covered on its side facing away from the respective resting surface (11, 11'), which contact-pressure unit is designed such that it exerts a pretensioning force which is directed radially inwards on the respective permanent magnet body (5, 5').

3. Rotor according to Claim 2, in which the contact-pressure unit comprises a bead.

4. Rotor according to either of Claims 2 and 3, in which the contact-pressure unit comprises a bow.

5. Rotor according to one of the preceding claims, in which a tangential fixing element is provided which is formed and arranged in such a way that it fixes tangentially the respective permanent magnet body (5, 5') in relation to the rotor basic body (3).

6. Rotor according to Claim 5, in which the fixing element is in the form of adhesive bonding.

7. Rotor according to one of the preceding claims, in which the respective sheet-metal holders (7, 7') are coupled to the respectively adjacent sheet-metal holders (7, 7') by form-fitting elements.

8. Rotor according to one of the preceding claims, in which the respective sheet-metal holders (7, 7') are coupled to the respective adjacent sheet-metal holder by means of welding.

9. Rotor according to one of the preceding claims, in which a sheet-metal cage (9) comprises at least one cage unit (19, 21), by means of which a plurality of sheet-metal holders (7, 7') are formed integrally.

10. Rotor according to Claim 9, in which a plurality of cage units (19, 21) are coupled to one another by form-fitting elements.

11. Rotor according to Claim 9 or 10, in which a plurality of cage units (19, 21) are coupled to one another by a welded joint.

## Revendications

1. Rotor pour un moteur électrique, comprenant
- une pièce (3) de base rotorique ayant des surfaces (11, 11') radiales d'appui,
- des pièces (5, 5') d'aimant permanent, qui, en étant dirigées radialement vers l'extérieur, sont mises sur les surfaces (11, 11') radiales d'appui,
- respectivement, un serre-tôle (7, 7') associé à chaque pièce (5, 5') d'aimant permanent, recouvrant, au moins en partie, la pièce (5, 5') d'aimant permanent sur son côté éloigné de la surface (11, 11') d'appui respective et constitué et disposé de manière à immobiliser radialement, par rapport à la pièce (3) de base rotorique, la pièce (5, 5') d'aimant permanent respective, le serre-tôle (7, 7') respectif recouvrant la pièce (5, 5') d'aimant permanent respective sur son côté éloigné de la surface (11, 11') d'appui respectif dans la direction périphérique du rotor (1) dans une région (13) centrale de la pièce (5, 5') d'aimant permanent respectif et épargnant les régions (15, 17) de bord respectives.

2. Rotor suivant la revendication 1, dans lequel le serre-tôle (7, 7') respectif comprend, dans la région du recouvrement de la pièce (5, 5') d'aimant permanent respectif, sur son côté éloigné de la surface (11, 11') d'appui respectif, une unité d'application d'une pression, qui est constituée de manière à appliquer une force de précontrainte dirigée radialement vers l'intérieur à la pièce (5, 5') d'aimant permanent respective.

3. Procédé suivant la revendication 2, dans lequel l'unité d'application d'une pression comprend une nervure.

4. Procédé suivant la revendication 2 ou 3, dans lequel l'unité d'application d'une pression comprend un arceau.

5. Rotor suivant l'une des revendications précédentes, dans lequel il est prévu un élément tangentiel d'immobilisation constitué et disposé de manière à immobiliser tangentiellement la pièce (5, 5') d'aimant permanent par rapport à la pièce (3) de base rotorique.

6. Rotor suivant la revendication 5, dans lequel l'élément d'immobilisation est constitué sous la forme d'un collage.

7. Rotor suivant l'une des revendications précédentes, dans lequel les serre-tôles (7, 7') respectifs sont couplés, par des éléments à complémentarité de forme, aux serre-tôles (7, 7') voisins respectivement.

8. Rotor suivant l'une des revendications précédentes, dans lequel les serre-tôles (7, 7') respectifs sont couplés, par soudage, aux serre-tôles voisins respectivement.

9. Rotor suivant l'une des revendications précédentes, dans lequel une cage (9) de tôle comprend au moins une unité (19, 21) de cage formée d'une seule pièce par les plusieurs serre-tôles (7, 7').

10. Rotor suivant la revendication 9, dans lequel plusieurs unités (19, 21) de cage sont couplées entre elles par des éléments à complémentarité de forme.

11. Rotor suivant la revendication 9 ou 10, dans lequel plusieurs unités (19, 21) de cage sont couplées entre elles par soudage.
